# EUROPEAN PATENT APPLICATION

(11) **EP 4 844 833 A1**
(43) Date of publication of application: **25.11.2026**
(21) Application number: 26168394.0
(22) Date of filing: 27.03.2026
(51) Int. Cl.: H01M 4/38, H01M 4/36, H01M 4/62, H01M 4/134, H01M 4/587, H01M 4/02

(54) **ANODE MATERIAL, ANODE PLATE, AND SECONDARY BATTERY**

(30) Priority: 20.05.2025 CN 202510654089
(71) Applicant: BTR New Material Group Co., Ltd., Shenzhen, Guangdong 518106 (CN)
(72) Inventor: Xiao, Chengmao, Guangdong 518106 (CN); He, Peng, Guangdong 518106 (CN); Guo, Eming, Guangdong 518106 (CN); Liu, Yijia, Guangdong 518106 (CN); Pang, Chunlei, Guangdong 518106 (CN)
(74) Representative: advotec.

(57) **Abstract**

An anode material, an anode plate, and a secondary battery provided. The anode material includes a carbon matrix and an active material at least partially located in the carbon matrix. In a peripheral region of the anode material, an average atomic percentage of carbon element is represented as A1, and an average atomic percentage of oxygen element is represented as B1; and in an inner layer region of the anode material, an average atomic percentage of carbon element is represented as A2, and an average atomic percentage of oxygen element is represented as B2, where 1.05 ≤ (A1 + B1)/(A2 + B2) ≤ 1.4. The peripheral region refers to a region within 0 nm to 200 nm from a surface of the anode material, and the inner layer region refers to a region greater than 200 nm from the surface of the anode material.

## Description

### TECHNICAL FIELD

The present disclosure relates to the technical field of a secondary battery, in particular to an anode material, an anode plate, and a secondary battery.

### BACKGROUND

Recently, with the integrated development of power devices, there is increased demand of energy supply for market. A lithium ion battery is not only widely used in mobile devices such as smart phone, portable computer, etc., but also in the fields such as electric vehicle, electric tool, etc. It is a main trend currently to develop a lithium ion battery with higher energy density. An anode material and a cathode material are cores of a battery, which determine working efficiency of the battery. At present, a commercial anode material is graphite, the capacity of which has been closed to the theoretical upper limit, limiting its further improvement. So there is an urgent need to develop a new generation of anode material with high energy density.

A silicon anode is considered generally as a next generation of anode material, which has advantages such as high capacity, rich source, and relative safety. However, silicon anode material exhibits significant volume expansion during cycling, leading to material pulverization, crushing, and rapid cycle degradation of the material. In view of this, there are multiple solutions at present for improvement, including performing structure design on silicon by using a technical means such as nanostructuring, porosification, etc.; and adopting a manner such as composite coating, etc. However, the prior art still cannot allow the anode material to possess good cycle performance while ensuring high capacity.

### SUMMARY

A main object of the present disclosure is to provide an anode material, an anode plate, and a secondary battery, to solve the problem of poor cycle performance of the current anode material.

In order to achieve the above object, in a first aspect of the present disclosure, an anode material is provided. The anode material includes a carbon matrix and an active material at least partially located in the carbon matrix. In a peripheral region of the anode material, an average atomic percentage of carbon element (C) is represented as A1, and an average atomic percentage of oxygen element (O) is represented as B1; and in an inner layer region of the anode material, an average atomic percentage of carbon element is represented as A2, and an average atomic percentage of oxygen element is represented as B2, where 1.05 ≤ (A1 + B1)/(A2 + B2) ≤ 1.4. The peripheral region refers to a region within 0 nm to 200 nm from a surface of the anode material, and the inner layer region refers to a region greater than 200 nm from the surface of the anode material.

In a second aspect of the present disclosure, an anode plate is provided. The anode plate includes an anode current collector and an anode active material layer loaded on at least one surface of the anode current collector, where a material of the anode active material layer includes the anode material according to the first aspect of the present disclosure.

In a third aspect of the present disclosure, a secondary battery is provided. The secondary battery includes the anode material according to the first aspect of the present disclosure or the anode plate according to the second aspect of the present disclosure.

According to the technical solutions of the present disclosure, by controlling distributions of the carbon element and the oxygen element in the anode material, on one side, the active material in the anode material is effectively confined to reduce the probability that the active material reacts with electrolyte during electrochemical cycling, on the other side, expansion rate of the active material during cycling is reduced, improving effectively cycle stability of the anode material on the basis of ensuring it to possess good electrochemical activity.

### BRIEF DESCRIPTION OF DRAWINGS

FIG. 1 is an SEM image of the anode material of Example 1.
FIG. 2 is an XRD pattern of the anode material of Example 1.
FIG. 3 is a test chart of initial charge-discharge specific capacity of the anode material of Example 1.

### DESCRIPTION OF EMBODIMENTS

To make the objectives, technical solutions, and advantages of the embodiments of the present disclosure clearer, the following clearly and completely describes the technical solutions in the embodiments of the present disclosure. If specific conditions are not indicated in the embodiments, it shall be carried out in accordance with the conventional conditions or the conditions recommended by the manufacturer. The reagents or instruments used without specifying the manufacturer are commercially available conventional products.

As described in the background of the present disclosure, there is a problem in the prior art that an anode material cannot possess both high capacity and good cycle performance. In order to solve the above problem, in typical embodiments of the present disclosure, an anode material is provided. The anode material includes a carbon matrix and an active material at least partially located in the carbon matrix. In a peripheral region of the anode material, an average atomic percentage of carbon element is represented as A1, and an average atomic percentage of oxygen element is represented as B1; and in an inner layer region of the anode material, an average atomic percentage of carbon element is represented as A2, and an average atomic percentage of oxygen element is represented as B2, where 1.05 ≤ (A1 + B1)/(A2 + B2) ≤ 1.4. For example, (A1 + B1)/(A2 + B2) is 1.05, 1.09, 1.1, 1.15, 1.2, 1.31, 1.34, 1.4, or any value within a range consisting of any two above values. The peripheral region refers to a region within 0 nm to 200 nm from a surface of the anode material, and the inner layer region refers to a region greater than 200 nm from the surface of the anode material.

Taking a silicon-based material as an example of the active material, herein, the average atomic percentages of the carbon element and the oxygen element in the peripheral region and the inner layer region are measured by the following method: the anode material is measured by an X-ray photoelectron spectroscopy through using Thermo Scientific K-Alpha apparatus (USA), where the whole test process is carried out in a glove box filled with argon, and Ta₂O₅ is used as a sputtering standard for calibrating sputtering rate and depth scale. A thermally oxidized Ta₂O₅ film with uniformly thick (a thickness of 300 nm) is preparing on a single crystal Ta substrate. The Ta₂O₅ layer is peeled off by sputtering, while monitoring change in the intensity of Ta₂O₅ characteristic peak and elemental Ta characteristic peak in the Ta4f peak to determine the time for peeling Ta₂O₅ off completely, and then the sputtering rate is calculated (rate = thickness/sputtering time) based on the known Ta₂O₅ film thickness, and the sputtering depth is calculated based on the sputtering rate. Each spectrum collection requires testing the fine spectra of three element C, Si, and O, with, for each time, the sputtering depth of argon ion set as 20 nm and the testing mode of spectrum collection + etching for 20 nm, repeating in sequence for a certain times. The above test is performed repeatedly on any 20 different regions with the same depth of the peripheral region of the anode material, and finally the average atomic percentages of elements C and O in the peripheral region are obtained statistically. The test methods for the average atomic percentages of elements C and O in the inner layer region are the same as above.

The peripheral region is a layer on the surface of the anode material, which plays a critical role on interface stability of the anode material and expansion control of the active material. The inner layer region focuses on main structure stability and conductivity of the anode material. By controlling (A1 + B1)/(A2 + B2) within the above range, the balance of the inner and outer structures of the anode material is ensured, enabling the anode material has good stability in whole, and facilitating improvement of cycle performance of the secondary battery. Further, 1.08 ≤ (A1 + B1)/(A2 + B2) ≤ 1.34, which is beneficial to further improve cycle stability of the anode material.

In some embodiments, 92% ≤ A1 ≤ 98%. For example, A1 is 92%, 93%, 94%, 95%, 96%, 97%, 98%, or any value within a range consisting of any two above values. Controlling the average atomic percentage A1 of carbon element in the peripheral region within the above range facilitates formation of a stable SEI film, preventing effectively electrolyte from further decomposing to form a thicker SEI film, reducing the opportunity of direct contact between the active material and the electrolyte, thereby reducing interfacial reaction activity of the anode material and reducing expansion rate of the active material. Further, 85% ≤ A1 ≤ 99%.

In some embodiments, 0.5% ≤ B1 ≤ 2.2%. For example, B1 is 0.5%, 0.9%, 1.0%, 1.2%, 1.4%, 1.6%, 1.8%, 2.0%, 2.1%, 2.2%, or any value within a range consisting of any two above values. Controlling the average atomic percentage B1 of oxygen element in the peripheral region within the above range facilitates formation a stable phase of silicon oxide, etc., further enhancing structure stability and mechanical strength of SEI film of the anode material, limiting volume change of the active material, and reducing the risk of shedding.

In some embodiments, 68% ≤ A2 ≤ 73%. For example, A2 is 68%, 69%, 70%, 71%, 72%, 73%, or any value within a range consisting of any two above values. Controlling the average atomic percentage of carbon element in the inner layer region within the above range facilitates ensuring conductivity performance of the anode material, being beneficial for rapid intercalation and de-intercalation of lithium ions, thereby optimizing charging and discharging efficiency of the battery.

In some embodiments, 1.1% ≤ B2 ≤ 3.5%. For example, B2 is 1.1%, 1.2%, 1.4%, 1.8%, 2.2%, 2.5%, 2.7%, 3.0%, 3.1%, 3.4%, or 3.5%, or any value within a range consisting of any two above values. Controlling the atomic percentage of oxygen element in the inner layer region within the above range facilitates improvement of main structure stability of the anode material, and enhances mechanical strength of the carbon skeleton, reducing irreversible damage of internal structure caused by expansion of the active material.

In some embodiments, A1 > A2, and B1 < B2.

The above limitations on the atomic percentage contents and the relationship thereof of carbon element and oxygen element in the peripheral region and the inner layer region facilitate improvement of interface stability between the anode material and electrolyte, reduction of expansion and pulverization of the active material, and maintaining structure stability of the active material during cycling. The high content of carbon element in the peripheral region also facilitates improvement of conductivity of the anode material. Moreover, controlling the lower carbon content and the higher oxygen content in the inner layer region also facilitates regulation of internal stress of the material, reducing concentration of the internal stress of the material caused by expansion of the active material, thereby improving structure stability of the anode material, and ensuring long-term cycle performance of the anode material.

In some embodiments, the anode material includes a coating layer. The coating layer enhances mechanical binding force between the active material and the carbon matrix to reduce risk of shedding of the active material during volume expansion, and reduces effectively direct contact between the active material and the electrolyte to inhibit decomposition of the electrolyte on the surface of the active material and improve stability of the electrochemical reaction. A material of the coating layer includes at least one of a carbon material, a metal oxide, an amorphous silicon, a conductive polymer, a fluoride, a phosphate, a nitride, and a metal salt.

The carbon material, such as graphite, carbon nanotube, or carbon nanosheet, significantly improves electrical conductivity of the anode material to promote rapid transport of lithium ions due to its excellent electrical conductivity and relatively stable chemical properties. In addition, it forms a protective shell to reduce direct contact between the active material and the electrolyte, stabilizing SEI film, thereby prolonging cycle life of the battery. The coating by the carbon material also buffers volume expansion during cycling, avoiding pulverization and shedding of the active material.

The metal oxide, such as aluminum oxide (Al₂O₃) or titanium oxide (TiO₂), enhances interface stability of the anode material, preventing electrolyte from decomposing, and reducing interface reaction. In addition, it provides certain mechanical strength, reducing volume change of the active material, and improving cycle stability and safety of the material. The coating layer of the metal oxide also improves thermal stability of the anode material, which is beneficial for the performance of the battery at different temperatures.

The amorphous silicon, as the coating layer, provides an additional storage site for lithium ions, and has good deformation absorption capability due to its amorphous structure characteristic, facilitating alleviating volume expansion of the active material during charging and discharging, reducing separation of the active material from the carbon matrix, and thereby enhancing cycle performance and capacity retention of the anode material.

The conductive polymer, such as polyaniline or polypyrrole, not only improves conductivity of the anode material to promote diffusion of lithium ions, but also forms an elastic protective layer to effectively absorb stress generated by expansion of the active material to avoid structure damage of the material. In addition, the coating layer of the conductive polymer also adjusts diffusion speed of electrolyte to control formation of a SEI film, thereby improving cycle stability and safety of the battery.

The fluoride, such as lithium fluoride (LiF), forms an interface layer with high-stability, reducing side reactions between the anode material and electrolyte, improving stability of SEI film, and reducing interface impedance. In addition, coating by the fluoride also improves electrochemical stability of the material, reducing charge loss of the material during cycling, and improving cycle efficiency of the battery.

The phosphate, such as lithium iron phosphate (LiFePO₄), provides an additional storage site for lithium ions for the anode material. In addition, it improves electrochemical stability and thermal stability of the material, reducing structure changes during cycling, enhancing mechanical strength and durability of the material, and improving performance of the battery under a condition with high power and high energy density.

The nitride, such as silicon nitride (Si₃N₄), has excellent chemical stability and mechanical strength, effectively protecting the active material to reduce direct contact with electrolyte, and a more stable SEI film is formed. In addition, coating by the nitride also improves thermal stability and cycle stability of the material, improving safety performance of the battery.

The metal salt, such as a lithium salt, reacts with electrolyte to form a protective film, reducing an interface reaction inside the battery, reducing consumption of the electrolyte, and increasing cycle efficiency. In addition, coating by the metal salt also adjusts properties of the electrolyte and improves intercalation and de-intercalation kinetics of lithium ions, thereby improving charge and discharge performance of the battery.

In some embodiments, the coating layer has a thickness of 1 nm to 300 nm. For example, the thickness of the coating layer is 1 nm, 2 nm, 5 nm, 10 nm, 20 nm, 30 nm, 50 nm, 100 nm, 200 nm, 300 nm, or any value within a range consisting of any two above values. Controlling the thickness of the coating layer within the above range balances electrochemical activity and stability of the anode material. Further, the coating layer has a thickness of 10 nm to 50 nm.

In some embodiments, the active material includes at least one of an elemental metal, a metal oxide, a metal alloy, a silicon-based material, and a phosphide.

The elemental metal is at least one of Li, Na, K, Sn, Ge, Fe, Mg, Ti, Zn, Al, and Cu. Among them, Li, Na, and K have an extremely high theoretical specific capacity, which significantly improves energy density of the battery. Sn and Ge are suitable for application in an electronic equipment, and Fe, Mg and Ti are suitable for a large-scale energy storage system, thus there are rich material resources and cost advantages. In addition, Sn and Zn form a stable alloy phase during charging and discharging, facilitating improvement of cycle performance of the battery. The elemental metal, such as Mg, Al, and Cu, facilitates reduction of battery cost , promoting sustainable development of a battery material.

Compared with a traditional graphite anode, the metal oxide, such as tin oxide (SnO₂), ferrous oxide (FeO), cobalt oxide (CoO), etc., has a higher theoretical specific capacity, and reacts with lithium ion through alloying and/or conversion reactions to provide more storage sites for lithium ion, thereby achieving higher energy density.

The metal alloy, such as silicon-lithium alloy and silicon-magnesium alloy, improves energy density of the battery, and optimizes structure of the anode material to a certain extent to improve its structure stability.

The phosphide has a high theoretical capacity. The phosphide includes at least one of phosphorus oxide and phosphate. The phosphide forms a relatively stable alloy phase, such as Li₃P or LiP, during electrochemical charging and discharging, which does not tend to generate drastic structure change compared with other active materials, such as silicon, facilitating prolonging cycle life of the battery.

The silicon-based material includes at least one of an elemental silicon, a silicon oxide, and a silicon alloy. When the silicon-based material includes an elemental silicon, the elemental silicon includes one or more of amorphous silicon, crystalline silicon, and a composite of crystalline silicon and amorphous silicon. Preferably, the elemental silicon includes amorphous silicon. The amorphous silicon expands isotropically during lithium intercalation, which reduces collapse of pores in the carbon matrix, and inhibit rapid fading of specific capacity of the battery including the anode material, thereby more facilitating improvement of lithium intercalation cycle performance of the anode material.

When the silicon-based material includes a silicon oxide, the silicon oxide has a formula of SiOₓ, where 0 < x ≤ 2. The silicon oxide is a silicon-oxygen composite containing an oxygen atom and a silicon atom, with a molar ratio of oxygen atom and silicon atom of 0 to 2, excepting 0. It is a substance formed by compounding two or more of Si, SiO_{0.2}, SiO_{0.5}, SiO_{0.8}, SiO, SiO_{1.2}, SiO_{1.5}, SiO_{1.8}, or SiO₂, etc., or a compound with a chemical formula of SiOₓ, or other value within the above range, which is not limited herein.

When the silicon-based material includes a silicon alloy, the silicon alloy is a silicon-lithium alloy, a silicon-magnesium alloy, etc. It should be noted that, in some cases, the silicon alloy includes an elemental silicon particle and an alloy.

In some embodiments, the silicon-based material further includes a silicon particle and a silicon oxide layer on surfaces of the silicon particle. The silicon oxide layer includes a silicon oxide with a formula of SiOₓ, where 0.5 ≤ x < 2. Specifically, the SiOₓ is SiO_{0.5}, SiO_{0.7}, SiO_{0.9}, SiO, SiO_{1.2}, SiO_{1.5}, SiO_{1.8}, SiO_{1.9}, etc., which is not limited herein.

In some embodiments, the silicon-based material further includes a silicon particle and a silicon oxide layer on surfaces of the silicon particle. Based on a mass of the silicon-based material, oxygen atom in the silicon-based material has a mass percentage of 1% to 18%. Specifically, the mass percentage of oxygen atom in the silicon-based material is 1%, 2%, 3%, 4%, 5%, 6%, 7%, 8%, 9%, 10%, 11%, 12%, 13%, 14%, 15%, 16%, 17%, 18%, or any value within a range consisting of any two above values. Controlling the mass percentage of oxygen atom in the silicon-based material within the above range facilitates formation of a stable silicon oxide layer on surfaces of the silicon particle, which reduces direct contact between the silicon particles and electrolyte, and further reduces side reactions between the silicon particles and the electrolyte, improving cycle stability of the anode material while maintaining a stable activity of the silicon-based material, thereby improving specific capacity of the anode material.

In some embodiments, the silicon-based material has an average particle size of 0.1 nm to 200 nm. For example, the average particle size of the silicon-based material is 1 nm, 2 nm, 3 nm, 4 nm, 5 nm, 6 nm, 7 nm, 8 nm, 9 nm, 10 nm, 20 nm, 40 nm, 80 nm, 100 nm, 200 nm, or any value within a range consisting of any two above values. By controlling the average particle size of the silicon-based material, it facilitates reduction of volume expansion and increase of diffusion rate of lithium ions. Further, the silicon-based material has an average particle size of 1 nm to 100 nm.

In some embodiments, the silicon-based material exhibits a morphology including at least one of dot-like, spherical, ellipsoidal, and sheet-like shape.

In some embodiments, the silicon-based material has a purity of > 99%. Controlling the purity of the silicon-based material within the above range ensures maximum utilization of the active material.

In some embodiments, based on a mass fraction of the anode material taken as 100%, the active material accounts for a mass fraction of 30% to70%. For example, the mass fraction of the active material is 30%, 35%, 40%, 45%, 50%, 55%, 60%, 65%, 70%, or any value within a range consisting of any two above values. Controlling the mass fraction of the active material within the above range balances electrochemical activity and stability of the anode material.

In some embodiments, the carbon matrix includes at least one of artificial graphite, natural graphite, amorphous carbon, activated carbon, mesocarbon microbead, carbon nanotube, carbon nanofiber, porous carbon, and graphene.

In some embodiments, based on a mass fraction of the carbon matrix taken as 100%, oxygen element in the carbon matrix accounts for a mass fraction of 0.5% to 5%. For example, the mass fraction of oxygen element in the carbon matrix is 0.5%, 1%, 1.5%, 2%, 2.5%, 3%, 3.5%, 4%, 4.5%, 5%, or any value within a range consisting of any two above values. By controlling the mass fraction of oxygen element in the carbon matrix within the above range, it facilitates controlling the contents of oxygen element in the peripheral region and the inner layer region of the anode material to be within the required ranges, thereby facilitating improvement of cycle stability of the anode material.

In some embodiments, the anode material has a median particle size of ≤ 10 µm. For example, the median particle size of the anode material is 1 µm, 2 µm, 3 µm, 4 µm, 5 µm, 6 µm, 7 µm, 8 µm, 9 µm, 10 µm, or any value within a range consisting of any two above values. The median particle size of the anode material, i.e. D50 particle size of the anode material, is measured by a laser diffraction method, and refers to the particle size at which the cumulative particle size distribution of the particles reaches 50%. Controlling the median particle size of the anode material within the above range facilitates shortening diffusion path of lithium ions from inside to surface of the anode material, reducing transport resistance of lithium ions, and accelerating charge and discharge rate of the battery.

In some embodiments, the anode material has a specific surface area of ≤ 5 m²/g. For example, the specific surface area of the anode material is 1 m²/g, 2 m²/g, 3 m²/g, 4 m²/g, 5 m²/g, or any value within a range consisting of any two above values. Controlling the specific surface area of the anode material within the above range facilitates reduction of formation of SEI film to reduce irreversible capacity loss, and maintaining stability of the battery performance. In addition, its processability is good, which facilitates preparation of an anode plate with a uniform distribution of the anode material.

In some embodiments, the anode material has a total pore volume of 0.001 cm³/g to 0.09 cm³/g. For example, the total pore volume of the anode material is 0.001 cm³/g, 0.005 cm³/g, 0.01 cm³/g, 0.02 cm³/g, 0.03 cm³/g, 0.04 cm³/g, 0.05 cm³/g, 0.06 cm³/g, 0.07 cm³/g, 0.08 cm³/g, 0.09 cm³/g, or any value within a range consisting of any two above values. Controlling the total pore volume of the anode material within the above range facilitates formation of a continuous conductive network to promote electron transmission, thereby improving conductivity of the anode material. In addition, it also facilitates maintaining structure integrity and stability of the anode material, thereby improving cycle life of the battery.

In other exemplary embodiments of the present disclosure, a method of preparing the above anode material is provided, including the following steps:
S1, preparing a composite including a carbon matrix and an active material; and
S2, forming a coating layer on a surface of the composite to obtain the anode material.

In some embodiments, the S1 includes the following steps:
S11, pretreating a carbon material in a reducing atmosphere to obtain the carbon matrix; and
S12, depositing the active material in the carbon matrix to obtain the composite.

In some embodiments, in the S11, the carbon material includes at least one of artificial graphite, natural graphite, amorphous carbon, activated carbon, mesocarbon microsphere, carbon nanotube, carbon nanofiber, porous carbon, and graphene.

In some embodiments, in the S11, the reducing atmosphere includes hydrogen and a protective gas. Specifically and without limitation, the protective gas includes at least one of nitrogen or an inert gas, where the inert gas includes at least one of argon, helium, neon, and krypton.

In some embodiments, in the S11, based on a total volume fraction of gases in the reducing atmosphere taken as 100%, the hydrogen accounts for a volume fraction of 5% to 40%. For example, the volume fraction of the hydrogen is 5%, 8%, 10%, 13%, 15%, 17%, 20%, 22%, 24%, 26%, 28%, 30%, 35%, 40%, or any value within a range consisting of any two above values. Controlling the volume fraction of the hydrogen within the above range facilitates accurate regulation of the content of oxygen element in the inner layer region of the anode material, with a relatively high safety for operation.

In some embodiments, in the S11, the pretreating is performed at a temperature of 400°C to 1000°C. For example, the temperature for the pretreating is 400°C, 420°C, 440°C, 470°C, 500°C, 520°C, 580°C, 600°C, 670°C, 700°C, 800°C, 900°C, 1000°C, or any value within a range consisting of any two above values. The pretreating is performed for a duration of 0.5 h to 10 h. For example, the duration for the pretreating is 0.5 h, 1 h, 1.5 h, 2 h, 2.5 h, 3 h, 3.5 h, 4 h, 4.5 h, 5 h, 6 h, 7 h, 8 h, 9 h, 10 h, or any value within a range consisting of any two above values. Under the above conditions, the oxygen content of the carbon matrix is effectively adjusted, and the active sites in the carbon matrix are increased, which facilitate deposition of the active material on the carbon matrix.

In some embodiments, in the S12, a method for depositing the active material on inner surface of the carbon substrate includes at least one of chemical vapor deposition, liquid-phase and solid-phase deposition. Among them, the chemical vapor deposition includes: feeding silicon-containing gas source to perform a chemical vapor deposition reaction with the carbon matrix. The silicon-containing gas source includes a silicon source. The silicon source is at least one of silane, disilane, trisilane, and tetrasilane. The above silicon source possesses high reaction activity to perform the chemical vapor deposition reaction at a relatively low temperature. In addition, the active material prepared by the chemical vapor deposition has a high purity.

In some embodiments, the silicon-containing gas source further includes at least one of nitrogen or an inert gas. Based on a total volume fraction of gases in the silicon-containing gas source taken as 100%, the silicon source accounts for a volume fraction of 15% to 65%. For example, the volume fraction of the silicon source is 15%, 17%, 20%, 25%, 30%, 35%, 40%, 45%, 50%, 55%, 60%, 65%, or any value within a range consisting of any two above values. The chemical vapor deposition is performed at temperature of 400°C to 650°C. For example, the temperature for the chemical vapor deposition is 400°C, 420°C, 450°C, 500°C, 520°C, 540°C, 580°C, 600°C, 620°C, 650°C, or any value within a range consisting of any two above values. The chemical vapor deposition has a duration of 5 h to 20 h. For example, the duration for the chemical vapor deposition is 5 h, 6 h, 7 h, 8 h, 9 h, 10 h, 12 h, 14 h, 16 h, 18 h, 20 h, or any value within a range consisting of any two above values. Performing the chemical vapor deposition under the above conditions facilitates uniform dispersion of the active material on the carbon matrix, thereby fully exerting the function of the active material.

In some embodiments, in the S2, mixing the composite with a carbon-containing gas source and calcinating to form a coating layer on the surface of the composite, to obtain the anode material. The carbon-containing gas source includes a carbon source. The carbon source is at least one of ethylene and acetylene. In addition, the carbon-containing gas source further includes nitrogen or an inert gas. The inert gas is at least one of argon, helium, neon, and krypton. Based on a total volume fraction of gases in the carbon-containing gas source taken as 100%, the carbon source accounts for a volume fraction of 10% to 60%. For example, the volume fraction of the carbon source is 10%, 12%, 14%, 16%, 18%, 20%, 22%, 24%, 26%, 28%, 30%, 32%, 35%, 40%, 45%, 50%, 55%, 60%, or any value within a range consisting of any two above values.

In some embodiments, in the S2, the carbon source is a mixture of ethylene and acetylene with a volume ratio of (1-6): 10. For example, the volume ratio of ethylene and acetylene is 1:10, 1.5:10, 2:10, 2.5:10, 3:10, 3.5:10, 4:10, 4.5:10, 5:10, 5.5:10, 6:10, or any value within a range consisting of any two above values. Selecting the mixture of ethylene and acetylene as the carbon source facilitates formation of a dense coating layer at shallow layer, thereby not only improving cycle stability of the anode material, but also ensuring a high electrochemical activity of the anode material.

In some embodiments, in the S2, the calcinating is performedat a temperature of 600°C to 700°C. For example, the temperature for the calcinating is 600°C, 620°C, 640°C, 660°C, 680°C, 700°C, or any value within a range consisting of any two above values. The calcinating is performed for a duration of 3 h to 8 h. For example, the duration for the calcinating is 3 h, 4 h, 5 h, 6 h, 7 h, 8 h, or any value within a range consisting of any two above values.

In other exemplary embodiments of the present disclosure, an anode plate is further provided. The anode plate includes an anode current collector and an anode active material layer loaded on at least one surface of the anode current collector. The anode active material layer includes the anode material in the above embodiments. Due to the use of the anode material in the above embodiments, the anode plate possesses good electrochemical activity and cycle life.

**In** other exemplary embodiments of the present disclosure, a secondary battery is further provided. The secondary battery includes the anode material in the above embodiments or the anode plate in the above embodiments. It possesses good energy density and cycle performance, thus is suitable for application in multiple fields.

The following further describes the present disclosure in detail with reference to specific examples, and these examples cannot be understood to limit the scope claimed in the present disclosure.

### Example 1

An example of the anode material of the present disclosure was provided, where the preparation method of the anode material in this example included the following steps:
S1, a porous carbon was placed in a reaction chamber and heated to 900°C in a nitrogen atmosphere, then pretreated by a mixed gas of nitrogen and hydrogen with a volume ratio of 90:10 for 2 h, to obtain a carbon matrix;
S2, silane and nitrogen with a volume ratio of 15:85 were fed into the reaction chamber, and the temperature was raised to 520°C, for performing a chemical vapor deposition reaction for 10 h, to obtain a composite;
S3, after the composite was cooled to room temperature, nitrogen and a carbon source were fed into the reaction chamber, and calcination was performed at 630°C for 4 h, then feeding the carbon source was stopped, the temperature was cooled to room temperature, and the anode material was obtained through sieving and grading, where the carbon source was a mixed gas of ethylene and acetylene, and a volume ratio of nitrogen: ethylene: acetylene was 14:1:5.5 during the calcination.

### Example 2

An example of the anode material of the present disclosure was provided, where the preparation method of the anode material in this example included the following steps:
S1, a porous carbon was placed in a reaction chamber and heated to 800°C in a nitrogen atmosphere, then pretreated by a mixed gas of nitrogen and hydrogen with a volume ratio of 92:8 for 2 h, to obtain a carbon matrix;
S2, silane and nitrogen with a volume ratio of 17:83 were fed into the reaction chamber, and the temperature was raised to 500°C, for performing a chemical vapor deposition reaction for 12 h, to obtain a composite;
S3, after the composite was cooled to room temperature, nitrogen and a carbon source were fed into the reaction chamber, and calcination was performed at 600°C for 4 h, then feeding the carbon source was stopped, the temperature was cooled to room temperature, and the anode material was obtained through sieving and grading, where the carbon source was a mixed gas of ethylene and acetylene, and a volume ratio of nitrogen: ethylene: acetylene was 30:3:7 during the calcination.

### Example 3

An example of the anode material of the present disclosure was provided, where the preparation method of the anode material in this example included the following steps:
S1, a porous carbon was placed in a reaction chamber and heated to 1000°C in a nitrogen atmosphere, then pretreated by a mixed gas of nitrogen and hydrogen with a volume ratio of 60:40 for 2 h, to obtain a carbon matrix;
S2, silane and nitrogen with a volume ratio of 15:85 were fed into the reaction chamber, and the temperature was raised to 420°C, for performing a chemical vapor deposition reaction for 20 h, to obtain a composite;
S3, after the composite was cooled to room temperature, nitrogen and a carbon source were fed into the reaction chamber, and calcination was performed at 600°C for 4 h, then feeding the carbon source was stopped, the temperature was cooled to room temperature, and the anode material was obtained through sieving and grading, where the carbon source was a mixed gas of ethylene and acetylene, and a volume ratio of nitrogen: ethylene: acetylene was 30:1:9 during the calcination.

### Example 4

An example of the anode material of the present disclosure was provided, where the preparation method of the anode material in this example included the following steps:
S1, a porous carbon was placed in a reaction chamber and heated to 850°C in a nitrogen atmosphere, then pretreated by a mixed gas of nitrogen and hydrogen with a volume ratio of 90:10 for 4 h, to obtain a carbon matrix;
S2, silane and nitrogen with a volume ratio of 15:85 were fed into the reaction chamber, and the temperature was raised to 620°C, for performing a chemical vapor deposition reaction for 7 h, to obtain a composite;
S3, after the composite was cooled to room temperature, nitrogen and a carbon source were fed into the reaction chamber, and calcination was performed at 600°C for 4 h, then feeding the carbon source was stopped, the temperature was cooled to room temperature, and the anode material was obtained through sieving and grading, where the carbon source was a mixed gas of ethylene and acetylene, and a volume ratio of nitrogen: ethylene: acetylene was 30:3:6 during the calcination.

### Example 5

An example of the anode material of the present disclosure was provided, where the preparation method of the anode material in this example included the following steps:
S1, a porous carbon was placed in a reaction chamber and heated to 700°C in a nitrogen atmosphere, then pretreated by a mixed gas of nitrogen and hydrogen with a volume ratio of 85:15 for 5 h, to obtain a carbon matrix;
S2, silane and nitrogen with a volume ratio of 65:35 were fed into the reaction chamber, and the temperature was raised to 470°C, for performing a chemical vapor deposition reaction for 14 h, to obtain a composite;
S3, after the composite was cooled to room temperature, nitrogen and a carbon source were fed into the reaction chamber, and calcination was performed at 630°C for 4 h, then feeding the carbon source was stopped, the temperature was cooled to room temperature, and the anode material was obtained through sieving and grading, where the carbon source was a mixed gas of ethylene and acetylene, and a volume ratio of nitrogen: ethylene: acetylene was 30:3:4 during the calcination.

### Example 6

An example of the anode material of the present disclosure was provided, where the preparation method of the anode material in this example was performed by the same way as Example 1, only excepting that: In the S3, the volume ratio of nitrogen: ethylene: acetylene was 14:0.5:6 during calcination.

### Example 7

An example of the anode material of the present disclosure was provided, where the preparation method of the anode material in this example was performed by the same way as Example 1, only excepting that: In the S3, the volume ratio of nitrogen: ethylene: acetylene was 14:5:1.5 during calcination.

### Example 8

An example of the anode material of the present disclosure was provided, where the preparation method of the anode material in this example was performed by the same way as Example 1, only excepting that: In the S3, the carbon source was ethylene, and the volume ratio of nitrogen and ethylene was 14:6.5 during the calcination.

### Example 9

An example of the anode material of the present disclosure was provided, where the preparation method of the anode material in this example was performed by the same way as Example 1, only excepting that: In the S3, the carbon source was acetylene, and the volume ratio of nitrogen the acetylene was 14: 6.5 during the calcination.

### Comparative Example 1

An anode material was provided, where the preparation method of which was performed by the same way as Example 1, excepting that:
In the S1, a porous carbon was placed in a reaction chamber and heated to 900°C in a nitrogen atmosphere, then pretreated by nitrogen for 2 h, to obtain a carbon matrix.

### Comparative Example 2

An anode material was provided, where the preparation method of which was performed by the same way as Example 1, excepting that:
In the S3, after the composite was cooled to room temperature, nitrogen and a carbon source were fed into the reaction chamber, and calcination was performed at 700°C for 4 h, then feeding the carbon source was stopped, the temperature was cooled to room temperature, and the anode material was obtained through sieving and grading, where the carbon source was ethylene, and a volume ratio of nitrogen and ethylene was 14:6.5.

### Performance Test

(1) The average atomic percentages of the carbon element and the oxygen element in the peripheral region and the inner layer region: the anode material was measured by an X-ray photoelectron spectroscopy through using Thermo Scientific K-Alpha apparatus (USA), where the whole test process was carried out in a glove box filled with argon, and Ta₂O₅ was used as a sputtering standard for calibrating sputtering rate and depth scale. A thermally oxidized Ta₂O₅ film with uniformly thick (a thickness of 300 nm) was preparing on a single crystal Ta substrate. The Ta₂O₅ layer was peeled off by sputtering, while monitoring change in the intensity of Ta₂O₅ characteristic peak and elemental Ta characteristic peak in the Ta4f peak to determine the time for peeling Ta₂O₅ off completely, and then the sputtering rate was calculated (rate = thickness/sputtering time) based on the known Ta₂O₅ film thickness, and the sputtering depth was calculated based on the sputtering rate. Each spectrum collection required testing the fine spectra of three element C, Si, and O, with, for each time, the sputtering depth of argon ion set as 20 nm and the testing mode of spectrum collection + etching for 20 nm. The above test was performed repeatedly on any 20 different regions with the same depth of the peripheral region of the anode material, and finally the average atomic percentages of elements C and O in the peripheral region were obtained statistically. The test methods for the average atomic percentages of elements C and O in the inner layer region were the same as above. Herein, at least three different depths were tested for the peripheral region and the inner layer region.
(2) The thickness of the coating layer: the anode material was fixed on the sample stage by using conductive adhesive, and prepared a flat profile by using an argon ion grinder (ion beam energy: 5 keV, grinding angle: 10°, and grinding time: 2 h). Their cross-section was observed by using a scanning electron microscope (SEM, acceleration voltage: 10 kV, working distance: 8 mm, and backscattered electron detector), 5 clear images at different positions were selected and from each of which 15 points were uniformly selected, and all of these points were taken an average value as the thickness of the coating layer.
(3) The average particle size of the silicon-based material:
   The silicon-based active material in the anode material was observed by transmission electron microscopy (TEM). The detailed procedure was as follows:
   Sample preparation: a small amount of the anode material was taken and added into anhydrous ethanol, which were ultrasonically dispersed (power: 250 W, time: 5 min) to uniform particle dispersion. 1-2 drops of the dispersion were dropped onto a copper grid and dried naturally or under vacuum at 40°C to 60°C for 10 min to 15 min, to ensure that the anode material particles exhibited no obvious agglomeration or overlapping.
   TEM observation and parameter settings: the acceleration voltage was 100 kV to 200 kV, and the magnification was adjusted so as to clearly distinguish the boundaries of individual nano-silicon particles, which was typically magnified to 100,000-500,000 times.
   Particle selection and measurement: 20 non-overlapping or undamaged silicon-based active material particles with full profile were selected randomly from the clear TEM images. The longest axis diameters of each particles were measured by using the built-in scale bar of the microscope or an image analysis software (e.g., ImageJ). An average value of these particle sizes was taken as the average particle size of the silicon-based active material.
(4) The type of the active material: the type of active material was confirmed by diffraction peaks measured through an X-ray diffractometer (XRD).
(5) The mass fraction of the active material: taking the silicon-based material as an example of the active material, which was calcined in an oxygen atmosphere by using a muffle furnace (Brand: Nanyang Xinyu, Model: SA2-9-17TP) to convert silicon and silicon monoxide in the sample into silicon dioxide, while carbon was burned into carbon dioxide and released out. The content of elemental silicon was calculated by weighing. The detailed procedure was as follows: 1.0000 g to 1.2000 g of a sample was weighed into an alumina crucible, with an accuracy of 0.1 mg. Three parallel samples were weighed for each sample. The heating program of the muffle furnace was set as follows: the initial temperature was 30°C; the temperature was raised to 400°C over 30 min and held at 400°C for 60 min to completely remove water vapor and low-boiling volatile components; then the temperature was raised to 900°C over 60 min and held at 900°C for 120 min to remove carbon and other volatile impurities; subsequently, the temperature was raised to 1100°C over 30 min and held at 1100°C for 480 min to complete the oxidation of silicon to silicon dioxide; and finally, stopping was set, that is, the heating was stopped for cooling.
(6) The median particle size of the anode material: according to GB/T 24533-2019 "Graphite Anode Material for Lithium-Ion Battery", the particle size of the anode material was measured by using a Malvern laser particle size analyzer (Mastersizer 3000) to obtain D50 value, which exhibited a symmetrical distribution similar to a normal distribution. In its volume-based distribution, the diameter at 50% cumulative was defined as D50; similarly, the diameter at 90% cumulative was defined as D90, and the diameter at 10% cumulative was defined as D10. During the test, 1 mL of an aqueous surfactant solution diluted at a mass ratio of 1:50 was added to a beaker containing a certain amount (0.3 g to 1 g) of the anode material sample and stirred, then pure water was added and uniformly stirred for testing. The ratio of the sample amount and the water was set such that the obscuration was 8% to 15% during the testing.
(7) The specific surface area of the anode material: the specific surface area of the anode material was measured according to the gas adsorption method at a low temperature controlled by cooling via liquid nitrogen (nitrogen adsorption multi-point BET) through using a TriStar3000&3020 specific surface area and pore size analyzer (Micromeritics, USA).
(8) The total pore volume of the anode material: the method for testing the total pore volume of the anode material included using an ASAP2460 Micropore Specific Surface Area and Pore Size Analyzer (Micromeritics, USA) for the testing. The pore volume was calculated within a pore size range of 17 Å to 3000 Å through using the BJH desorption cumulative volume of pores model. At the temperature of liquid nitrogen, the surface of a material has an equilibrium adsorption capacity of nitrogen relating to properties such as its pore size. According to the variation law of adsorption capacity with relative pressure during the adsorption process, multiple models could be fitted to calculate the pore size. The report generated by the software calculated the pore size distribution, total pore volume, and pore volume within a specified range by using the Density Functional Theory (DFT) method.
(9) The gas generation test: a) 5 g of the anode material was filled into a sealable container, and deionized water was added until the remaining volume above the container was 60 mL; b) the container was sealed and shaken uniformly, and stored at room temperature for one day; and c) after 24 h, the container was shaken fully again to disperse the precipitate in the liquid, then the lid of the container was opened, and the hydrogen concentration was detected by a hydrogen detector and converted to units of cc/(kg·day).
(10) The electrochemical performance test: the anode material in each of the examples and comparative examples was mixed with sodium carboxymethyl cellulose, styrenebutadiene rubber, conductive graphite (KS-6), and carbon black (SP) in a mass ratio of 92:2:2:2:2 to prepare a slurry, which was uniformly coated on a copper foil and dried to obtain an anode plate. A button battery was assembled in a glove box with argon atmosphere, by using a separator of a polypropylene microporous membrane, an electrolyte of 1 mol/L of lithium hexafluorophosphate solution with a solvent which is a mixed solution of ethylene carbonate, ethyl methyl carbonate, and dimethyl carbonate in a volume ratio of 1:1:1, and a counter electrode of lithium metal sheet.

At room temperature, each batteries were subjected to tests of the discharge specific capacity and the cycle capacity retention at 25°C on a CT2001A Land Battery Test System, with the test conditions as follows: (1) stood for 6 h; (2) discharged at a constant current of 0.1C to 0.01 V, and discharged at a constant voltage to a current of 0.05C; (3) stood for 30 min; (4) charged at a constant current of 0.1C to 1.5 V; (5) stood for 30 min; (6) discharged at a constant current of 0.1C to 0.01 V, and discharged at a constant voltage to a current of 0.05C; (7) stood at 25°C for 180 min; (8) charged at a constant current of 1C to 1.5 V; (9) stood for 60 min; (10) discharged at a constant current of 1C to 0.01 V, and discharged at a constant voltage to a current of 0.05C; (11) stood for 30 min; (12) repeated the steps (8) to (11) for 100 times, and then stopped the test. The capacity retention after 100 cycles = discharge specific capacity after 100 weeks of cycle / initial discharge specific capacity. The anode materials prepared in Examples and Comparative Examples were prepared into batteries, and measured the initial coulombic efficiency on the CT2001A Land Battery Test System with a charge-discharge current of 0.05C. The measured values were the average values of 3 button batteries made of each the anode materials.

**Table 1**

| Items | Example 1 | Example 2 | Example 3 | Example 4 | Example 5 | Example 6 | Example 7 | Example 8 | Example 9 | Comparative Example 1 | Comparative Example 2 |
|---|---|---|---|---|---|---|---|---|---|---|---|
| A1 (at%) | 95 | 92 | 96 | 98 | 87.4 | 91 | 90 | 89 | 86 | 92 | 84.6 |
| B1 (at%) | 2.2 | 1.0 | 0.5 | 0.9 | 0.5 | 2.0 | 2.2 | 3.1 | 3.2 | 3.2 | 3.5 |
| A2 (at%) | 71 | 68.4 | 73 | 73 | 72 | 71 | 76 | 74.5 | 79.4 | 63 | 82.2 |
| B2 (at%) | 3.0 | 2.5 | 1.1 | 1.1 | 3.5 | 3.1 | 3.4 | 3.0 | 2.7 | 4.5 | 4.7 |
| (A1 + B1)/ (A2 + B2) | 1.31 | 1.31 | 1.30 | 1.33 | 1.16 | 1.26 | 1.16 | 1.19 | 1.09 | 1.41 | 1.01 |
| Thickness of the coating layer (nm) | 48 | 34 | 38 | 45 | 43 | 39 | 40 | 30 | 28 | 49 | 48 |
| Mass fraction of the active material (%) | 50.2 | 48.1 | 50.9 | 51.0 | 47.5 | 50.0 | 50.1 | 49.2 | 49.6 | 51.1 | 50.9 |
| Median particle size (µm) | 8.2 | 5.9 | 6.8 | 7.2 | 10.6 | 8.3 | 8.2 | 8.2 | 8.4 | 8.0 | 7.9 |
| Specific surface area (m²/g) | 2.4 | 2.0 | 1.1 | 0.8 | 1.0 | 2.9 | 2.6 | 3.0 | 3.2 | 5.0 | 5.9 |
| Total pore volume (cm²/g) | 0.003 | 0.009 | 0.001 | 0.004 | 0.006 | 0.003 | 0.004 | 0.009 | 0.008 | 0.09 | 0.17 |
| Gas generation value cc/(kg·day) | 0 | 0.02 | 0.04 | 0 | 0 | 0.05 | 0.056 | 0.07 | 0.078 | 0.39 | 0.23 |
| Initial specific capacity (mAh/g) | 1903 | 1889 | 1913 | 1922 | 1819 | 1891 | 1901 | 1883 | 1873 | 1892 | 1908 |
| Initial coulombic efficiency (%) | 92.6 | 92.7 | 92.5 | 92.7 | 92.5 | 92.5 | 92.7 | 92.4 | 92.4 | 92.5 | 92.4 |
| Capacity retention after 100 cycles (%) | 93.1 | 92.8 | 93.2 | 92.9 | 92.0 | 92.0 | 91.8 | 90.3 | 90.1 | 86.0 | 85.0 |

It can be seen from Table 1 that (A1 + B1)/ (A2 + B2) of the anode materials in Examples 1 to 9 are all in the range of 1.05 to 1.4, and the batteries made of the anode materials in Examples 1 to 9 not only possess good specific capacity and initial coulombic efficiency, but also possess good cycle stability due to 90% or more of the capacity retention after 100 cycles.

In addition, compared with the performance test results of Examples 1 to 7, it can be seen that when A1 > A2 and B1 < B2, the anode materials have better cycle performance than that of Examples 8 to 9, and the batteries prepared from which have the capacity retention after 100 cycles of more than 91%.

Comparing the performance test results of Examples 1 to 4, it can be seen that that when the anode material satisfies: 92% ≤ A1 ≤ 98%, 68% ≤ A2 ≤ 73%, 0.5% ≤ B1 ≤ 2.2%, and 1.1% ≤ B2 ≤ 3.0%, their cycle stability are further improved.

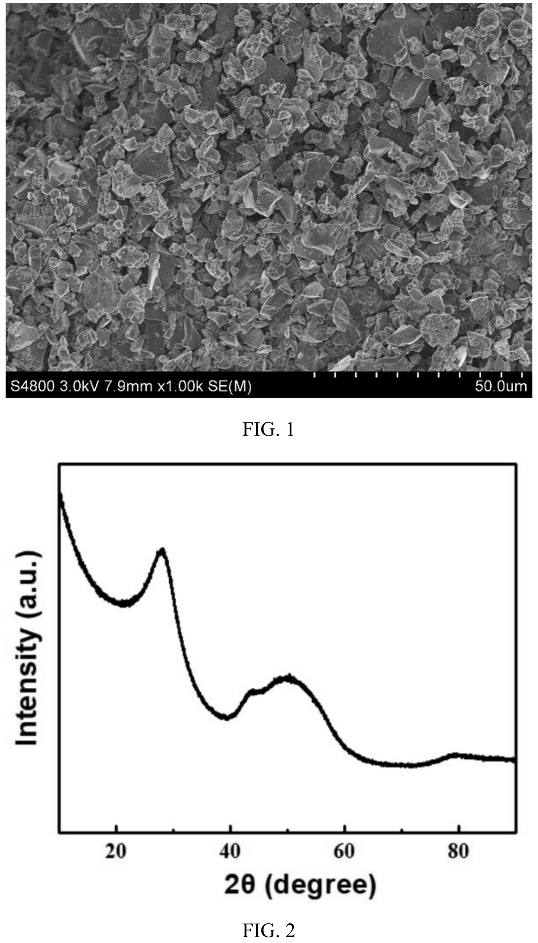

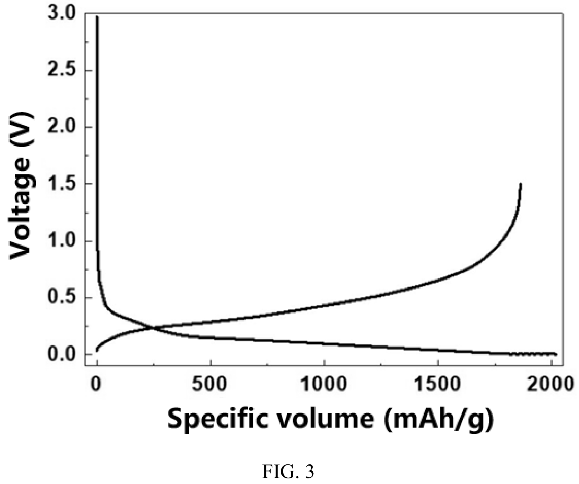

FIG. 1 is an SEM image of the anode material of Example 1, and from which it can be seen that the particle size is relatively uniform. FIG. 2 is an XRD pattern of the anode material of Example 1, and from which it can be seen that there is a broad diffuse peak at 2θ = 28.4°, where the broad diffuse peak is a characteristic peak of amorphous silicon, indicating that the active material is amorphous silicon. FIG. 3 is a test chart of initial charge-discharge specific capacity of the anode material of Example 1, and from which it can be seen that the initial charge-discharge specific capacity is high.

The above descriptions are only preferred embodiments of the present disclosure and are not intended to limit the present disclosure, and various modifications and changes may be made by those skilled in the art. Any modification, equivalent replacement, improvement, and the like made within the spirit and principles of the present disclosure shall fall within the protection scope of the present disclosure.

## Claims

1. An anode material, comprising a carbon matrix and an active material at least partially located in the carbon matrix; wherein
in a peripheral region of the anode material, an average atomic percentage of carbon element is represented as A1, and an average atomic percentage of oxygen element is represented as B1; and
in an inner layer region of the anode material, an average atomic percentage of carbon element is represented as A2, and an average atomic percentage of oxygen element is represented as B2,
wherein 1.05 ≤ (A1 + B1)/(A2 + B2) ≤ 1.4;
the peripheral region refers to a region within 0 nm to 200 nm from a surface of the anode material; and
the inner layer region refers to a region greater than 200 nm from the surface of the anode material.

2. The anode material according to claim 1, wherein (A1 + B1)/(A2 + B2) is 1.05, 1.09, 1.1, 1.15, 1.2, 1.31, 1.34, 1.4, or any value within a range consisting of any two above values.

3. The anode material according to claim 1 or 2, wherein the anode material comprises at least one of the following features:
(1) $92 % \leq A 1 \leq 98 % ;$and
(2) A1 is 92%, 93%, 94%, 95%, 96%, 97%, 98%, or any value within a range consisting of any two above values.

4. The anode material according to any one of claims 1 to 3, wherein the anode material comprises at least one of the following features:
(1)$68 % \leq A 2 \leq 73 % ;$ and
(2) A2 is 68%, 69%, 70%, 71%, 72%, 73%, or any value within a range consisting of any two above values.

5. The anode material according to any one of claims 1 to 4, wherein the anode material comprises at least one of the following features:
(1) $0.5 % \leq B 1 \leq 2.2 % ;$ and
(2) B1 is 0.5%, 0.9%, 1.0%, 1.2%, 1.4%, 1.6%, 1.8%, 2.0%, 2.1%, 2.2%, or any value within a range consisting of any two above values.

6. The anode material according to any one of claims 1 to 5, wherein the anode material comprises at least one of the following features:
(1)$1.1 % \leq B 2 \leq 3.5 % ;$ and
(2) B2 is 1.1%, 1.2%, 1.4%, 1.8%, 2.2%, 2.5%, 2.7%, 3.0%, 3.1%, 3.4%, or 3.5%, or any value within a range consisting of any two above values.

7. The anode material according to any one of claims 1 to 6, wherein A1 > A2, and B1 < B2.

8. The anode material according to any one of claims 1 to 7, wherein the anode material comprises a coating layer, which comprises at least one of the following features:
(1) a material of the coating layer comprises at least one of a carbon material, a metal oxide, an amorphous silicon, a conductive polymer, a fluoride, a phosphate, a nitride, and a metal salt; and
(2) the coating layer has a thickness of 1 nm to 300 nm.

9. The anode material according to any one of claims 1 to 8, wherein the active material comprises at least one of an elemental metal, a metal oxide, a metal alloy, a silicon-based material, and a phosphide.

10. The anode material according to any one of claims 1 to 9, wherein the active material comprises at least one of the following features:
(1) the active material comprises an elemental metal, wherein the elemental metal comprises at least one of Li, Na, K, Sn, Ge, Fe, Mg, Ti, Zn, Al, and Cu;
(2) the active material comprises a silicon-based material, wherein the silicon-based material comprises at least one of an elemental silicon, a silicon oxide, and a silicon alloy;
(3) the active material comprises a silicon-based material, wherein the silicon-based material has an average particle size of 0.1 nm to 200 nm;
(4) the active material comprises a silicon-based material, wherein the silicon-based material exhibits a morphology comprising at least one of dot-like, spherical, ellipsoidal, and sheet-like shape; and
(5) the active material comprises a silicon-based material, wherein the silicon-based material has a purity of > 99%.

11. The anode material according to any one of claims 1 to 10, wherein based on a mass fraction of the anode material taken as 100%, the active material accounts for a mass fraction of 30% to70%.

12. The anode material according to any one of claims 1 to 11, wherein the active material comprises at least one of the following features:
(1) the carbon matrix comprises at least one of artificial graphite, natural graphite, amorphous carbon, activated carbon, mesocarbon microbead, carbon nanotube, carbon nanofiber, porous carbon, and graphene; and
(2) based on a mass fraction of the carbon matrix taken as 100%, oxygen element in the carbon matrix accounts for a mass fraction of 0.5% to 5%.

13. The anode material according to any one of claims 1 to 12, wherein the active material comprises at least one of the following features:
(1) the anode material has a median particle size of ≤ 10 µm;
(2) the anode material has a specific surface area of ≤ 5 m²/g; and
(3) the anode material has a total pore volume of 0.001 cm³/g to 0.09 cm³/g.

14. An anode plate, comprising an anode current collector and an anode active material layer loaded on at least one surface of the anode current collector, wherein a material of the anode active material layer comprises the anode material according to any one of claims 1 to 13.

15. A secondary battery, comprising the anode material according to any one of claims 1 to 13 or the anode plate according to claim 14.
